# EUROPÄISCHE PATENTANMELDUNG

(11) **EP 1 051 914 A1**
(43) Veröffentlichungstag der Anmeldung: **15.11.2000**
(21) Anmeldenummer: 99109145.5
(22) Anmeldetag: 08.05.1999
(51) Int. Cl.: A23K 1/16, A23K 1/18

(54) **Verwendung von Kreatin als Futterzusatz**

(71) Anmelder: DSM Fine Chemicals Austria GmbH, 4021 Linz (AT); UFA AG, 3360 Herzogenbuchsee (CH)
(72) Erfinder: Wallimann, Theo, 8963 Kindhausen AG (CH); Pfirter, Hans Peter, 8607 Seegräben (CH)
(74) Vertreter: Klostermann, Ingrid

(57) **Zusammenfassung**

Verwendung von Kreatin (Creatine) oder von Kreatinsalzen als Futterzusatz für Zucht- und Masttiere als Ersatz für Fleischmehl, Fischmehl und/oder antimikrobielle Leistungsförderer.

## Beschreibung

Über Jahrzehnte war die Verwendung von Tiermehl, das aus hygienisierten und getrockneten Schlachtabfällen, sowie aus umgestandenen Tieren inklusive Rindern und anderen Wiederkäuern besteht, in Futterrationen für landwirtschaftliche Nutztiere allgemeine Praxis. Nach dem Auftreten von BSE's (Bovine Spongiform Encephalopathies) bei Rindern wurde jedoch ein Fütterungsverbot von Tiermehl für Wiederkäuer erlassen. Bei Schweinen und anderen Tieren sind vergleichbare Krankheitssymptome als TSE's (Transmissible Spongiform Encephalophaties) bekannt. Für Schweine und Geflügel wird Tiermehl dennoch weiterhin als unbedenklich erachtet. Die Befürchtung, dass diese Tiere aber doch Empfänger und symptomlose Überträger von BSE- oder TSE-spezifischen Strukturen sein könnten, und die von ihnen stammenden Nahrungsmittel unerwünschte Auswirkungen auf den Menschen haben könnten, hat zu einem weitverbreiteten Ausschluss von Tiermehl auch aus Futterrationen für Schweine und Geflügel geführt.

Bei rein vegetabiler Fütterungsweise bestehen jedoch Hinweise, wonach bei Zucht- und Masttieren infolge fehlender, in tierischen Geweben vorhandener Inhaltsstoffe Nachteile in Kauf zu nehmen sind.

Auch bei normal zubereiteten, beispielsweise gekochten, Schlachtabfällen und prozessiertem Tierfutter ist der, verglichen mit Frischfleisch, relativ geringe bis fehlende Kreatin-Gehalt von Nachteil. Insbesondere bei Dosenfutter, wie beispielsweise für Katzen und Hunde, wird durch das Aufkochen der Zutaten bei der Futterherstellung der im Frischfleisch vorhandene Kreatinanteil zerstört.

Kreatin (Creatine) ist eine schon seit mehr als hundert Jahren bekannte, sowohl bei Menschen als auch bei Tieren körpereigene, Substanz, die zum Teil vom Körper selbst hergestellt oder über die Nahrung aufgenommen wird.
Die Bedeutung von Kreatin im Stoffwechsel liegt auf zellulärer Ebene, indem es eine kurzzeitige Energiereserve bildet und am Energietransport beteiligt ist (Wallimann et al., Biochem. J. 281, 21-40;1992). Die Einnahme von Kreatin führt beim Menschen bei entsprechendem Training zu verbesserter Leistungsfähigkeit der Muskulatur. Auch bei Hunden, insbesondere bei Rennhunden, Jagdhunden u.ä., wurde dieser Effekt bereits festgestellt, wie etwa in GB 2 300 103 beschrieben wird.

Weiters werden dem Futter für die Fütterung von Zucht- und Masttieren immer weniger antimikrobielle Leistungsförderer ("Antibiotika") als Futterzusatz zugesetzt, durch deren Wegfall es jedoch zusätzlich zu einer stärkeren Sensibilisierung der Tiere gegenüber Belastungen des Verdauungstrakts und des Immunsystems kommt.

Unerwarteterweise wurde nun gefunden, dass Kreatin nicht nur beim Menschen und bei Hunden zu einer verbesserten Leistungsfähigkeit der Muskulatur führt, sondern dass der Einsatz von Kreatin bei landwirtschaftlichen Nutztieren, insbesondere bei Hühnern, Schweinen und Lachsen, die Leistung der Tiere verbessern kann, vor allem bei Wegfall von Futtermitteln tierischer Herkunft wie Fleischmehl oder Fischmehl.

Gegenstand der Erfindung ist demnach die Verwendung von Kreatin oder von Kreatinsalzen als Futterzusatz für Zucht- und Masttiere als Ersatz für Fleischmehl, Fischmehl und/oder antimikrobielle Leistungsförderer.

Kreatin ist eine seit langem bekannte Substanz (The Merck Index, Eleventh Edition, No 2570, 1989) und kommerziell erhältlich oder kann wie beispielsweise in Ullmann's Encyclopedia of Industrial Chemistry, 5. Auflage, Band A 12, 552, VCH-Verlagsgesellschaft, Weinheim (1987) oder in US 2 654 779 beschrieben durch Reaktion von Cyanamid mit Sarkosin leicht hergestellt werden.
Andere Herstellungsvarianten sind z.B. aus EP-A-0754 679, das die Reaktion von Cyanamid mit Sarkosinat beschreibt, bekannt.
Die Bezeichnung Kreatin umfasst somit die isolierte Form des natürlich vorkommenden Kreatins und chemisch synthetisierte Formen.

Kreatin kann dabei als solches oder in Form eines Salzes eingesetzt werden.
Als Salze eignen sich beispielsweise Kreatinpyruvate der allgemeinen Formel (Kreatin)ₓ(Pyruvat)_{y}(H₂O)ₙ, mit x = 1 bis 100, y = 1 bis 10 und n = 0 bis 10, die in WO 98/28263 beschrieben sind. Weiters eignen sich die aus EP-A-0775 108 bekannten Kreatinsalze , d.h. Kreatincitrat, -maleat, -fumarat, - tartrat oder -malat oder die in WO 98/38183 beschriebenen Kreatinascorbate der Formel (Kreatin)ₓ(Ascorbat)_{y}(H₂O)ₙ, mit x = 1 bis 100, y = 1 bis 100 und n = 0 bis 20. Auch andere Salze wie etwa Kreatin-Phosphorenolpyruvat, Kreatinsuccinate, -formiate und -gluconate, Potassium-, Calcium- oder Natriumkreatin oder Kreatinphosphat, das kommerziell erhältlich ist, eignen sich für die erfindungsgemäße Verwendung. Weiters kommen auch Cyclokreatin und andere literaturbekannte Kreatinanaloge in Frage.
Es können auch Mischungen von Kreatin mit einem oder mehreren der oben genannten Salze oder Mischungen aus einem oder mehreren der erwähnten Salze eingesetzt werden.

Kreatin oder dessen Salze finden bei der Fütterung als Futterzusatz für die unterschiedlichsten Tiere und somit für unterschiedlichste Futterformen Anwendung.

Ein weiterer Gegenstand der Erfindung ist daher die Verwendung von Kreatin oder von Kreatinsalzen als Futterzusatz in vorwiegend vegetabilem Futter als Ersatz für Fleisch- oder Fischmehl und/oder antimikrobielle Leistungsförderer zur Steigerung der Fleischqualität, Verbesserung des Gewichtszuwachses und Muskelfleischansatzes, Verbesserung des lean body mass-Index und der Embryonalentwicklung, zur Steigerung der Fruchtbarkeit der Muttertiere, der männlichen Fruchtbarkeit und Überlebensrate der Jungtiere, Steigerung der Legeleistung bei Geflügeln und Senkung der Infektionsrate. Durch die Verwendung von Kreatin als Futterzusatz wird bei Geflügelarten, wie Hühnern, Enten, Gänsen und Truthühnern, eine höhere Zuwachsrate beim Gewicht mit geringerem Futteraufwand erreicht, wobei auch die Zeit in der die entsprechende Gewichtszunahme erzielt wird, gegenüber bisher eingesetzten Fütterungsmethoden mit Tiermehl und antimikrobiellen Leistungsförderern verkürzt ist. Der Mehrzuwachs ergibt sich dabei durch einen erhöhten Proteinansatz ("Fleischzunahme") und nicht durch eine stärkere Verfettung der Tiere, wodurch eine Verbesserung des lean body mass-Index erzielt wird.

Weitere Vorteile bei der Geflügelfutterergänzung durch Kreatin oder dessen Salze sind eine gesteigerte Eilegeleistung der Hennen, eine Steigerung der Fruchtbarkeit bzw. der Spermaproduktion und -qualität der Hähne, sowie eine Senkung der Infektionsrate durch ein verbessertes Immunsystem.

Ein Gegenstand der Erfindung ist demnach die Verwendung von Kreatin oder von Kreatinsalzen als Futterzusatz für Geflügel als Ersatz für Tiermehl und/oder antimikrobielle Leistungsförderer zur Steigerung der Fleischqualität, Verbesserung des Gewichtszuwachses und Muskelfleischansatzes, Verbesserung des lean body mass Index, zur Steigerung der Eilegeleistung der Hennen, zur Steigerung der Spermaproduktion und -qualität der Hähne und zur Senkung der Infektionsrate.

Bei Schweinen kann ebenfalls die Verwendung von Tiermehl bei der Fütterung gänzlich entfallen. Zweitens kann auch auf den Zusatz von antimikrobiellen Leistungsförderern, wie etwa Antibiotika, verzichtet werden, da Kreatin auch bei Schweinen wachstumsfördernde Eigenschaften aufweist. Zusätzlich wird durch die erfindungsgemäße Verwendung von Kreatin oder Kreatinsalzen eine verbesserte Fruchtbarkeit der weiblichen Tiere, die sich in einer Erhöhung der Brunstzyklen und der Aufnahmebereitschaft zur Trächtigkeit zeigt, erzielt, wodurch u.a. die Zahl der Ferkel pro Wurf erhöht wird. Weitere Vorteile sind eine verbesserte Embryoentwicklung durch Fütterung der Muttertiere mit Kreatin oder Kreatinsalze, verbesserte Spermatogenese bei den männlichen Zuchttieren, sowie eine bessere Gewichtszunahme. Auch die Überlebensrate und das Gedeihen der Ferkel während der Laktation durch Kreatinaufnahme über die Muttermilch des durch Kreatin zugefütterten, optimal versorgten Muttertieres und später durch Kreatinsupplementation der Jungtiere werden gesteigert. Weiters wird eine Senkung der Infektionsrate durch ein verbessertes Immunsystem erzielt.

Ein weiterer Gegenstand der Erfindung ist demnach die Verwendung von Kreatin oder von Kreatinsalzen als Futterzusatz für Schweine als Ersatz für Tiermehl und/oder antimikrobielle Leistungsförderer zur Steigerung der Fleischqualität, Verbesserung des Gewichtszuwachses und Muskelfleischansatzes, Verbesserung des lean body mass Index und der Embryoentwicklung, Steigerung der Fruchtbarkeit der Muttertiere und Überlebensrate der Jungtiere, Verbesserung der Spermatogenese, sowie zur Senkung der Infektionsrate.

Bei Zuchtlachsen kann durch die Verwendung von Kreatin oder von Kreatinsalzen als Futterzusatz die Fütterung auf vorwiegend vegetabiler Basis erfolgen, wodurch der Verbrauch an Fischmehl, das aus zumeist pazifischen Kleinfischen gewonnen wird, wesentlich reduziert wird. Ein weiterer Vorteil ist eine Senkung der Infektionsrate durch ein verbessertes Immunsystem.

Ein weiterer Gegenstand der Erfindung ist demnach die Verwendung von Kreatin oder von Kreatinsalzen als Futterzusatz für Zuchtlachse als Ersatz für Fischmehl und/oder antimikrobielle Leistungsförderer.

Kreatin oder Kreatinsalze können aber auch dem Milchersatzpulver für Mastkälber zugesetzt werden, wodurch Milchbestandteile eingespart werden können und eine verbesserte Gewichtszunahme, eine verbesserte Fleischqualität, eine Erhöhung des reinen Muskelfleischanteils (lean body mass)und eine Reduktion des Fettanteils der Kälber, sowie eine Senkung der Infektionsrate durch ein verbessertes Immunsystem und eine verbesserte Futterverwertung erreicht wird.

Die Verwendung von Kreatin oder von Kreatinsalzen als Zusatz für Milchersatzpulver für Mastkälber zur Verbesserung der Gewichtszunahme, zur Verbesserung der Fleischqualität, zur Erhöhung des reinen Muskelfleischanteils und zur Reduktion des Fettanteils der Kälber, sowie zur Senkung der Infektionsrate und Verbesserung der Futterverwertung ist somit auch ein Gegenstand der Erfindung.

Eine weitere Verwendungsmöglichkeit von Kreatin und Kreatinsalzen als Futterzusatz ist Nass- beziehungsweise Dosenfutter für Hunde und Katzen, bei welchem im Herstellungsprozess der im Ausgangsmaterial ursprünglich vorhandene Gehalt an Kreatin reduziert wird.
In diesem Fall wird erstens wieder eine Senkung der Infektionsrate durch ein verbessertes Immunsystem erreicht und neben der Tatsache, dass die Tiere lebendiger und stärker sind, weisen die Tiere zweitens ein deutlich glänzenderes Fell auf.

Kreatin oder dessen Salze können somit den unterschiedlichsten Futterarten zugesetzt werden. Folgende Futterarten sind für den erfindungsgemäßen Zusatz geeignet:
trocken oder nass verabreichtes Mehlfutter, pelletiertes Futter, Expanderfutter, extrudiertes Futter, Futterflocken, Milchersatzpulver, Nass- oder Dosenfutter.

Kreatin oder dessen Salze werden dabei beispielsweise bei der Produktion der Futtermischung, d.h. vor dem Abfüllen und Verpacken in Büchsen u.s.w. als Nahrungsergänzungsmittel zugemischt. Eine weitere Möglichkeit ist der Zusatz nach der Expansion oder Extrusion des Futters, sowie bei der Pelletherstellung.
Der Zusatz von Kreatin erfolgt dabei entweder in Pulverform oder bei wasserlöslichen Salzen in Form einer wässrigen Lösung.

Die dem Futtermittel zugesetzte Menge an Kreatin entspricht bevorzugt der in Dosis-Wirkungs-Versuchen ermittelten Menge bzw. der in Anlehnung an den im Frischfleisch vorhandenen Kreatingehalt ermittelten Menge. Gegebenenfalls kann auch die zwei- bis vierfache Menge zugesetzt werden.

Die Mengen an zugesetztem Kreatin sind dabei von den zu fütternden Tieren abhängig, sodass sie innerhalb eines großen Bereiches schwanken können. Bevorzugte Kreatinmengen liegen im Bereich von 1 bis 50 g/kg, besonders bevorzugt von 1 bis 5g/kg lufttrockenem Futter. Die verabreichte Futtermenge sollte dabei bevorzugt eine Versorgung mit 0.2 bis 0.5 g Kreatin pro kg metabolischem Körpergewicht (G^{0.75}) gewährleisten.

Kreatin und dessen Salze können gegebenenfalls gemeinsam mit üblichen Futtermittelzusätzen, wie Fette, Aminosäuren, Mineralstoffe, Spurenelementen, Vitaminen und Aromastoffe, zugesetzt werden.

### Beispiel 1:

Die Auswirkung von Zusatz von Kreatin im Futtermittel für Masthühner wurde untersucht.
Dabei wurde festgestellt, dass durch den Zusatz von 0,2% an Kreatin (0,2g/kg) zum luftgetrockneten Futter bei 41 Tagen Mastdauer eine Steigerung des Endgewichtes um 4% gegenüber bisherigen Fütterungsmethoden (ohne Kreatinzusatz) erzielt wurde. Dieser Zuwachs an Gewicht wurde nur durch Fleischzunahme, jedoch nicht durch Fettzunahme erreicht (Verbesserung des lean body mass Index), wobei das Fleisch auch eine verbesserte Qualität aufwies.
Der Futtermittelverbrauch sank dabei um etwa 2-3%, gegenüber bisherigen Fütterungsmethoden.

## Patentansprüche

1. Verwendung von Kreatin oder von Kreatinsalzen als Futterzusatz für Zucht- und Masttiere als Ersatz für Fleischmehl, Fischmehl und/oder antimikrobielle Leistungsförderer.

2. Verwendung von Kreatin und/oder von Kreatinsalzen nach Anspruch 1 in vorwiegend vegetabilem Futter zur Steigerung der Fleischqualität, Verbesserung des Gewichtszuwachses und Muskelfleischansatzes und/oder Verbesserung des lean body mass-Index und/oder der Embryonalentwicklung und/oder zur Steigerung der Fruchtbarkeit der Muttertiere und/oder der männlichen Fruchtbarkeit und/oder Überlebensrate der Jungtiere und/oder Steigerung der Legeleistung bei Geflügeln und/oder Senkung der Infektionsrate.

3. Verwendung von Kreatin und/oder von Kreatinsalzen nach Anspruch 1 für Geflügel zur Steigerung der Fleischqualität, Verbesserung des Gewichtszuwachses und Muskelfleischansatzes und/oder Verbesserung des lean body mass Index und/oder zur Steigerung der Eilegeleistung der Hennen und/oder zur Steigerung der Spermaproduktion und -qualität der Hähne und/oder zur Senkung der Infektionsrate.

4. Verwendung von Kreatin und/oder von Kreatinsalzen nach Anspruch 1 für Schweine zur Steigerung der Fleischqualität, Verbesserung des Gewichtszuwachses und Muskelfleischansatzes und/oder Verbesserung des lean body mass Index und/oder der Embryoentwicklung und/oder Steigerung der Fruchtbarkeit der Muttertiere und/oder Überlebensrate der Jungtiere und/oder Verbesserung der Spermatogenese der männlichen Tiere und/oder zur Senkung der Infektionsrate.

5. Verwendung von Kreatin und/oder von Kreatinsalzen als Futterzusatz für Zuchtlachse als Ersatz für Fischmehl und/oder antimikrobielle Leistungsförderer.

6. Verwendung von Kreatin und/oder von Kreatinsalzen als Zusatz für Milchersatzpulver für Mastkälber zur Verbesserung der Gewichtszunahme und/oder zur Verbesserung der Fleischqualität und/oder zur Erhöhung des reinen Muskelfleischanteils und zur Reduktion des Fettanteils und/oder zur Senkung der Infektionsrate und/oder Verbesserung der Futterverwertung.

7. Verwendung von Kreatin und/oder Kreatinsalzen als Futterzusatz für Nass- oder Dosenfutter für Hunde und Katzen, zur Senkung der Infektionsrate, Verbesserung des Immunsystem und/oder Erreichung eines glänzenden Felles.

8. Verwendung von Kreatin und/oder Kreatinsalzen als Futterzusatz nach Anspruch 1 bis 7, dadurch gekennzeichnet, dass natürlich vorkommendes Kreatin oder chemisch synthetisierte Formen, Kreatinpyruvate der allgemeinen Formel (Kreatin)ₓ(Pyruvat)_{y}(H₂O)ₙ, mit x = 1 bis 100, y = 1 bis 10 und n = 0 bis 10, d.h. Kreatincitrat, -maleat, -fumarat, - tartrat oder -malat, oder Kreatinascorbate der Formel (Kreatin)ₓ(Ascorbat)_{y}(H₂O)ₙ, mit x = 1 bis 100, y = 1 bis 100 und n = 0 bis 20, Kreatin-Phosphorenolpyruvat, Kreatinsuccinate, -formiate und -gluconate, Potassium-, Calcium- oder Natriumkreatin oder Kreatinphosphat, Cyclokreatin oder andere Kreatinanaloge, oder Mischungen daraus verwendet werden.

9. Verfahren zur Herstellung von Tierfutter enthaltend Kreatin und/oder Kreatinsalze, dadurch gekennzeichnet, dass Kreatin und/oder Kreatinsalze bei der Produktion der Futtermischung vor dem Abfüllen und Verpacken als Nahrungsergänzungsmittel entweder in Pulverform oder bei wasserlöslichen Salzen in Form einer wässrigen Lösung zugemischt werden.

10. Verfahren nach Anspruch 7, dadurch gekennzeichnet, dass Kreatin und/oder Kreatinsalze in einer Menge von 1 bis 50 g/kg lufttrockenem Futter zugesetzt werden.
